# EUROPÄISCHE PATENTANMELDUNG

(11) **EP 1 826 588 A2**
(43) Veröffentlichungstag der Anmeldung: **29.08.2007**
(21) Anmeldenummer: 07001767.8
(22) Anmeldetag: 26.01.2007
(51) Int. Cl.: G01V 1/00

(54) **Verfahren und Vorrichtung zur Vorauserkundung beim Tunnelbau**

(30) Priorität: 28.02.2006 DE 102006009246
(71) Anmelder: GeoForschungsZentrum Potsdam, 14473 Postdam (DE); Christian-Albrechts-Universität zu Kiel, 24118 Kiel (DE)
(72) Erfinder: Günter, Borm, 76227 Karlsruhe (DE); Otto, Peter, 14471 Potsdam (DE); Giese, Rüdiger, 14715 Schmetzdorf (DE); Lüth, Stefan, 12437 Berlin (DE); Bohlen, Thomas, 24582 Wattenbek (DE); Lorang, Ulrich, 22301 Hamburg (DE); Rabbel, Wolfgang, 24220 Böhnhüsen (DE); Müller, Christof, 24116 Kiel (DE)
(74) Vertreter: Hertz, Oliver

(57) **Zusammenfassung**

Ein Verfahren zur Vorauserkundung beim Bau eines Tunnels (1) umfasst die Schritte Erzeugung von seismischen Wellen in einem Vortriebsbereich (2) des Tunnels (1) mit einer Anregungseinrichtung (10) Empfang von seismischen Wellen, die im Vortriebsbereich (2) reflektiert wurden, mit einer Sensoreinrichtung (20), und Auswertung von seismischen Signalen der Sensoreinrichtung (20) unter Verwendung eines vorbestimmten Ausbreitungsmodells der seismischen Wellen von der Anregungseinrichtung (10) über den Vortriebsbereich (2) zur Sensoreinrichtung (20), wobei das Ausbreitungsmodell der seismischen Wellen auf Eigenschaften von Oberflächenwellen (O) in einer Tunnelwand (3) basiert, die bei der Erzeugung der seismischen Wellen von der Anregungseinrichtung (10) zu einem Ortsbrustbereich (4) des Tunnels und/oder beim Empfang der seismischen Wellen vom Ortsbrustbereich (4) zur Sensoreinrichtung (20) laufen. Es wird auch eine Vorrichtung zur Vorauserkundung beim Bau eines Tunnels beschrieben.

## Beschreibung

Die Erfindung betrifft ein Verfahren zur Vorauserkundung beim Tunnelbau, z. B. zur Erfassung von geologischen Strukturen in vorwiegend harten Untergründen, wie z. B. Gestein, insbesondere ein Verfahren mit den Merkmalen des Oberbegriffs von Anspruch 1. Des Weiteren betrifft die Erfindung eine Vorrichtung zur Vorauserkundung beim Tunnelbau, insbesondere eine Vorrichtung mit den Merkmalen des Oberbegriffs von Anspruch 13.

Es ist bekannt, seismische Messungen anzuwenden, um von der Erdoberfläche, von Bohrungen oder von Tunneln ausgehend z. B. für Forschungs- und Erkundungszwecke geologische Strukturen zu erfassen. Dabei wird nach einer Einleitung von möglichst energiereichen akustischen Schwingungen in das untersuchte Material dessen Schwingungsantwort mit Hilfe von Geofonen oder Akzelerometern in Betrag, Richtung und Phase bestimmt. Bei der Erkundung von Gesteinseigenschaften in der Tiefe sind Raumwellen von Bedeutung, wobei Kompressionswellen und Scherwellen unterschieden werden, die sich in einem Festkörper ausbreiten können. Kompressionswellen sind LongitudinalWellen. Sie haben relativ zu den anderen Wellentypen die größte Ausbreitungsgeschwindigkeit und werden deshalb als Primär-Wellen (P-Wellen) bezeichnet. Ihre Ausbreitungsgeschwindigkeit ist in ideal elastischen Festkörpern abhängig von den elastischen Materialparametern Elastizitätsmodul (E-Modul), Schermodul (G-Modul) und Dichte. Scherwellen sind Transversalwellen. Sie sind immer langsamer als die P-Wellen und werden deshalb Sekundär-Wellen (S-Wellen) genannt. Ihre Ausbreitungsgeschwindigkeit ist in ideal elastischen Festkörpern nur abhängig von den elastischen Materialparametern Schermodul (G-Modul) und Dichte.

Zur Erfassung geologischer Strukturen im Vortriebsbereich eines im Bau befindlichen Tunnels werden mit einer seismischen Quelle seismische Wellen in den Vortriebsbereich eingeleitet und mit einem seismischen Sensor Wellen erfasst, die im Vortriebsbereich reflektiert wurden. Bei derzeit bekannten Vorauserkundungsmethoden werden P- und/oder S-Wellen angeregt und ausgewertet. Dabei werden bisher sowohl Quellen als auch Sensoren möglichst nahe an der Ortbrust des Tunnels angeordnet, um ein möglichst weit in Vortriebsrichtung reichendes Antwortsignal zu erhalten.

Es ist bekannt, unter bestimmten Annahmen über die Richtung und Art der Wellenausbreitung aus der Laufzeit der seismischen Wellen die Laufstrecke zu einer geologischen Struktur im Vortriebsbereich und damit den Ort der geologischen Struktur zu ermitteln (siehe: G. Borm et al. 2003 "Integrated Seismic Imaging System for Geological Prediction During Tunnel Construction" in ISRM - 2003 Technology Roadmap for Rock Mechanics, South African Institute of Mining and Metallurgy, Johannisburg Symposium Series S33, p 137 - 142; und R. Giese et al. "In situ seismic investigations of fault zones in the Leventina Gneiss Complex of the Swiss Central Alps" in "Petrophysical Properties of Crystalline Rocks (SP 240)", "Journal of the Geological Society (UK)",2005, S. 15-24.). Bei den bisher verwendeten Modellen über die Wellenausbreitung wird angenommen, dass Raumwellen durch das Felsgestein im Wesentlichen gradlinig von der seismischen Quelle zur geologischen Struktur und zurück zum seismischen Sensor laufen. Aus der Laufzeit und der für das jeweilige Gestein charakteristischen Geschwindigkeit der Raumwellen kann dann die Laufstrecke zur geologischen Struktur unmittelbar berechnet werden.

In der Praxis hat sich gezeigt, dass die herkömmliche Vorauserkundungstechnik eine beschränkte Zuverlässigkeit hat. Wurde beispielsweise eine geologische Struktur, wie z. B. eine Gesteinsheterogenität im Vortriebsbereich mit verschiedenen Positionen der seismischen Quelle oder des seismischen Sensors erfasst, so ergab die Auswertung der Schwingungsantwort aus dem Vortriebsbereich verschiedene Positionen der geologischen Struktur. Die Anwendung der herkömmlichen Verfahren zur Vorauserkundung ist daher auf geringe Entfernungen im Vortriebsbereich beschränkt.

Eine Ursache für die geringe Reproduzierbarkeit der herkömmlichen Vorauserkundung wurde in der beschränkten Einstellbarkeit und Reproduzierbarkeit von Anregungsparametern herkömmlicher seismischer Quellen gesehen. Aber auch die Anwendung von seismischen Quellen, die hinsichtlich der Genauigkeit und Reproduzierbarkeit der Einstellung von Anregungsparametern optimiert sind (siehe z. B. DE 199 44 032 A1, DE 101 41 518 A1), lieferten eine nur beschränkte Verbesserung der seismischen Vorauserkundung.

Ein weiteres Problem besteht bei der herkömmlichen Vorauserkundung in der Integration z. B. der seismischen Quelle in den Schneidkopf einer Hartgesteins-Tunnelbohrmaschine (Hartgesteins-TBM). Die Aufrechterhaltung eines sicheren Betriebes der seismischen Quelle ist unter den Baustellenbedingung (Erschütterungen, Staub, Wasser) sehr schwer möglich. Probleme treten speziell im Schneidradbereich der TBM auf. Eine weitere Schwierigkeit besteht in der Realisierung der herkömmlichen Ankopplung der seismischen Quelle an die Ortsbrust. Diese Ortsbrust kann große Unebenheiten aufweisen, die eine flächige Anpressung der seismische Quelle nicht zulassen.

Seismische Vorauserkundungsverfahren sind auch in den Publikationen von L. Petronio et al. in "Geophysics", Bd. 67 (6), 2002, S. 1798-1809, G. Nord et al. in "Tunnelling and Underground Space Technology", Bd. 7 (3), 1992, S. 237-242 und von S. S. Choi et al. in "Tunnelling and Underground Space Technology", Bd. 19, 2004, S. 533 sowie in DE 198 52 455 C2 und DE 198 42 975 B4 beschrieben. Diese Vorauserkundungsverfahren basieren auf der Anregung und Auswertung von Raumwellen im Gestein.

Die Aufgabe der Erfindung ist es, ein verbessertes Verfahren zur Vorauserkundung beim Bau eines Tunnels bereitzustellen, mit dem die Nachteile der herkömmlichen Techniken überwunden werden und das insbesondere eine genaue und reproduzierbare Lokalisierung geologischer Strukturen im Vortriebsbereich eines Tunnels ermöglicht. Das Verfahren soll insbesondere eine verbesserte Erfassung geologischer Strukturen mit einem vergrößerten Sichthorizont in die Tiefe des Vortriebsbereiches ermöglichen. Die Aufgabe der Erfindung ist es auch, eine verbesserte Vorrichtung zur Vorauserkundung beim Bau eines Tunnels bereitzustellen, mit der die Nachteile der herkömmlichen Vorauserkundungssysteme überwunden werden.

Diese Aufgaben werden mit einem Verfahren oder einer Vorrichtung mit den Merkmalen der Patentansprüche 1 oder 13 gelöst. Vorteilhafte Ausführungsformen und Anwendungen der Erfindung ergeben sich aus den abhängigen Ansprüchen.

Verfahrensbezogen basiert die Erfindung auf der allgemeinen technischen Lehre, bei der Vorauserkundung im Tunnelbau seismische Signale, die mit einer Anregungseinrichtung im Tunnel erzeugt und nach einer Reflektion oder Streuung im Vortriebsbereich mit einer Sensoreinrichtung im Tunnel erfasst werden, einer Auswertung unter der Voraussetzung zu unterziehen, dass die seismischen Signale durch seismische Wellen erzeugt werden, die in einer seitlichen Tunnelwand als Oberflächenwellen und im Vortriebsbereich als Raumwellen laufen. Mit der Anregungseinrichtung werden zuerst Oberflächenwellen in der Tunnelwand angeregt, die in einem Ortsbrustbereich des Tunnels in Raumwellen konvertiert werden. Raumwellen, die im Vortriebsbereich an einer vorbestimmten geologischen Struktur reflektiert werden, laufen zum Ortsbrustbereich des Tunnels zurück und werden dort in reflektierte Oberflächenwellen konvertiert, die mit der Sensoreinrichtung erfasst werden. Erfindungsgemäß erfolgt mit der Auswertungseinrichtung eine Laufzeitauswertung der seismischen Signale, bei der aus einer Laufzeit, die aus den seismischen Signalen der Sensoreinrichtung ermittelt wird, eine Laufstrecke der seismischen Wellen berechnet wird, wobei Eigenschaften der Oberflächenwellen in der Tunnelwand berücksichtigt werden.

Die Erfinder haben festgestellt, dass abweichend von der früheren Annahme einer im Wesentlichen geradlinigen Ausbreitung der Raumwellen vom Ort der Anregung zur geologischen Struktur und zurück zur Sensoreinrichtung in der Realität zunächst eine lineare Ausbreitung der seismischen Wellen von der Anregungseinrichtung zum Ortsbrustbereich und von diesem zur geologischen Struktur und umgekehrt zur Sensoreinrichtung gegeben ist. In Abhängigkeit von den Positionen der Anregungsund Sensoreinrichtungen im Tunnel liefert der Anteil der Laufstrecke der seismischen Wellen in der Tunnelwand einen bestimmten Beitrag zur Gesamtlaufstrecke, der bei den herkömmlichen Vorauserkundungsverfahren nicht korrekt berücksichtigt wurde. Des Weiteren wurde festgestellt, dass der größte Teil der bei der Anregung gebildeten seismischen Energie bei den üblichen seismischen Quellen in Form von Oberflächenwellen freigesetzt wird. Vorteilhafterweise nimmt die Energiedichte der Oberflächenwellen proportional zu ihrem Laufweg ab, während der Amplitudenabfall von Raumwellen proportional zum Quadrat ihres Laufweges ist.

Im Gegensatz zu den herkömmlichen seismischen Verfahren, die auf der Durchschallung mit direkt von der seismischen Quelle zu einem oder mehreren Sensoren verlaufenden Raumwellen oder mit Echos (Reflektionen) dieser Raumwellen an im Vortriebsbereich eines Tunnels liegenden Störungen beruhen, werden mit dem erfindungsgemäßen Verfahren gezielt an der seitlichen Tunnelwand entlang laufende Oberflächenwellen angeregt. Die Oberflächenwellen werden an der Tunnelortsbrust z. B. in Scherwellen umgewandelt und sind so für eine reflektionsseismische Analyse des Vortriebsbereichs geeignet.

Erfindungsgemäß wird somit ein Vorauserkundungsverfahren bereitgestellt, bei dem die seismischen Signale mit einem Ausbreitungsmodell der seismischen Wellen ausgewertet werden, das als Modell- oder Verfahrensparameter (Auswertungsparameter) Eigenschaften der Oberflächenwellen in mindestens einer Tunnelwand enthält. Die seismischen Signale werden in Abhängigkeit von Eigenschaften der Oberflächenwellen, d. h. unter Berücksichtigung des Auftretens der Oberflächenwellen und von deren Eigenschaften ausgewertet. Mit dem Ausbreitungsmodell wird insbesondere eine Laufzeitauswertung der seismischen Signale ermöglicht, bei der aus einer Laufzeit, die aus den seismischen Signalen der Sensoreinrichtung ermittelt wird, die Laufstrecke der seismischen Wellen in Abhängigkeit von Eigenschaften von Oberflächenwellen in der Tunnelwand berechnet wird.

Vorrichtungsbezogen basiert die Erfindung entsprechend auf der allgemeinen technischen Lehre, eine Vorrichtung zur Vorauserkundung beim Tunnelbau bereitzustellen, die mit einer Auswertungseinrichtung zur Auswertung der seismischen Signalen der Sensoreinrichtung ausgestattet ist, wobei die Auswertungseinrichtung zur Signalauswertung mit dem Ausbreitungsmodell eingerichtet ist, das auf den Eigenschaften der Oberflächenwellen in der Tunnelwand basiert. Die Auswertungseinrichtung ist insbesondere zur Berechnung der Laufstrecke von seismischen Wellen bei einer Ausbreitung als Oberflächenwellen entlang der Tunnelwand und als Raumwellen vom Ortsbrustbereich in den Vortriebsbereich eingerichtet. Mit der Auswertungseinrichtung wird die Laufstrecke der seismischen Wellen unter Berücksichtigung von den Eigenschaften der Oberflächenwellen in der Tunnelwand berechnet.

Vorteilhafterweise können die Anregungs- und Sensoreinrichtungen mit Abstand von der Ortsbrust im Tunnel angeordnet werden, ohne dass wie bei den herkömmlichen Techniken Dämpfungsprobleme durch lange Laufwege der Wellen entstehen. Weder die seismische Quelle noch die Sensoren müssen in unmittelbarer Nähe der Ortsbrust und damit des Bohrkopfes der TBM angeordnet sein. Die früheren Probleme bei der Integration der seismischen Quelle in die TBM und der Ankopplung der seismischen Quelle an die Ortsbrust werden vermieden. Die Anregung kann in einem Tunnelbereich mit einer bearbeiteten Wand ohne Unebenheiten erfolgen, so dass die flächige Anpressung der seismische Quelle verbessert wird.

Gemäß einer bevorzugten Ausführungsform der Erfindung enthält das Ausbreitungsmodell als Auswertungsparameter die Weglängen der Oberflächenwellen von der Anregungseinrichtung zum Ortsbrustbereich des Tunnels und/oder vom Ortsbrustbereich zur Sensoreinrichtung. Entsprechend kann die Laufstrecke der seismischen Wellen von der Anregungseinrichtung über die geologische Struktur im Vortriebsbereich zur Sensoreinrichtung als Summe der entsprechenden Teilstrecken der Oberflächenwellen entlang der Tunnelwand und der doppelten Entfernung der geologischen Struktur vom Ortsbrustbereich berechnet werden. Da die Weglängen der Oberflächenwellen von der Anregungseinrichtung zum Ortsbrustbereich und zurück vom Ortsbrustbereich zur Sensoreinrichtung bekannt sind, kann vorteilhafterweise die Entfernung der geologischen Struktur vom Ortsbrustbereich mit erhöhter Genauigkeit festgestellt werden. Des Weiteren können im Vergleich zu den herkömmlichen Vorauserkundungsverfahren geologische Strukturen mit größeren Abständen vom Ortsbrustbereich zuverlässig erfasst werden.

Vorteilhafterweise kann die Genauigkeit der Signalauswertung noch verbessert werden, wenn weitere spezifische Eigenschaften der Oberflächenwellen, insbesondere die Geschwindigkeit der Oberflächenwellen in der Tunnelwand bei der Berechnung der Laufstrecke berücksichtigt werden. Hierfür enthält das als Auswertungsparameter die Geschwindigkeit der Oberflächenwellen der Tunnelwand. Die Oberflächenwelle bewegt sich bspw. mit einer Geschwindigkeit von rd. 92 % der entsprechenden Scherwellengeschwindigkeit einer Raumwelle. Allgemein kann die Oberflächenwellengeschwindigkeit gemessen oder bei Verfügbarkeit für ein gegebenes Felsgestein aus Tabellenwerken entnommen werden. Mit der Berücksichtigung der Oberflächenwellengeschwindigkeit kann vorteilhafterweise der Beitrag der Oberflächenwellen zur Gesamtlaufzeit der seismischen Wellen genauer erfasst werden, so dass auch die gesuchte Entfernung der geologischen Struktur vom Ortsbrustbereich mit erhöhter Genauigkeit und Reproduzierbarkeit ermittelt werden kann.

Ein weiterer Vorteil der Erfindung besteht in der großen Variabilität bei der Erzeugung der seismischen Wellen mit verschiedenen Typen von Anregungseinrichtungen. Mit einer Impuls-Anregung können sich Vorteile für eine einfache Laufzeitmessung ergeben. Zur Impuls-Anregung wird bspw. ein Impakthammer verwendet, wie er in DE 199 44 032 A1 beschrieben ist. Alternativ kann eine periodische Sinus-Anregung vorgesehen sein, mit der besondere Vorteile für die Erfassung stapelbarer Signale und damit für die Verbesserung des Signal-Rausch-Verhältnisses erreicht werden. Als Anregungseinrichtung für die periodische Sinusanregung wird vorzugsweise der magnetostriktive Vibrator verwendet, der in DE 101 41 518 A1 beschrieben ist. Die Verwendung des Impakthammers oder des magnetostriktiven Vibrators als Anregungseinrichtungen hat den Vorteil, dass mit diesen Geräten vorrangig Oberflächenwellen angeregt werden. Rund 75% bis 80% der gesamten Wellenenergie läuft mit den Oberflächenwellen zum Ortsbrustbereich.

Erfindungsgemäß werden die seismischen Wellen vorzugsweise in einem Frequenzbereich von 200 Hz bis 600 Hz erzeugt und/oder gemessen. Die Erfinder haben festgestellt, dass sich in diesem Frequenzbereich die Hauptsignalenergie der Oberflächenwellen in der Tunnelwand befindet, so dass entsprechend eine hohe Empfindlichkeit der Signalauswertung erreicht wird.

Wenn gemäß einer weiteren bevorzugten Ausführungsform der Erfindung die Erzeugung der seismischen Wellen an mehreren Anregungspositionen der Tunnelwand erfolgt, kann die Genauigkeit und Reproduzierbarkeit der Signalauswertung vorteilhafterweise erhöht werden. Die Anregungspositionen zeichnen sich durch verschiedene Abstände vom Ortsbrustbereich aus. Für jede Anregungsposition kann die Laufstrecke der seismischen Wellen und insbesondere ein Wert für den Abstand der geologischen Struktur vom Ortsbrustbereich ermittelt werden. Die gemittelten Abstandswerte liefern genauere Informationen über die Position der geologischen Struktur.

Gemäß einer besonders bevorzugten Ausführungsform der Erfindung wird das Vorauserkundungsverfahren mehrfach an verschiedenen Vortriebspositionen des Ortsbrustbereiches des Tunnels wiederholt. Vorteilhafterweise liefert jede Messung während des fortschreitenden Tunnelbaus für eine vorbestimmte Vortriebsposition einen zugehörigen Abstand der geologischen Struktur vom Ortsbrustbereich. Aus einer Reihe von (mindestens zwei) Abständen und der bekannten Information über die Relativpositionen der Anregungs- und Sensoreinrichtungen und des Ortsbrustbereiches kann mittels trigonometrischer Beziehungen die Position der geologischen Struktur im Raum erfasst werden.

Zum Empfang der reflektierten Oberflächenwellen werden vorzugsweise mehrere Sensoren verwendet, die im Tunnel verteilt mit verschiedenen Abständen vom Ortsbrustbereich angeordnet sind. Vorteilhafterweise liefern die Sensoren Laufzeitwerte mit einer erhöhten Genauigkeit, so dass entsprechend auch die Laufstrecke der seismischen Wellen genauer erfasst werden kann.

Die Erzeugung der seismischen Wellen mit der Anregungseinrichtung erfolgt z. B. mit einem Abstand vom Ortsbrustbereich, der geringer als 2 m ist. Die Anregungseinrichtung wird bspw. an einer Tunnelbohrmaschine (TBM) befestigt. Vorteilhafterweise kann damit eine Dämpfung der Oberflächenwellen beim Lauf entlang der Tunnelwand verringert werden. Gemäß einer bevorzugten Alternative erfolgt die Erzeugung der seismischen Wellen mit der Anregungseinrichtung jedoch mit einem Abstand vom Ortsbrustbereich, der größer als 2 m, insbesondere größer als 5 m ist. Damit kann vorteilhafterweise erreicht werden, dass beim Betrieb der Anregungseinrichtung und der Tunnelbohrmaschine keine gegenseitigen Störungen auftreten.

Des Weiteren wird die Sensoreinrichtung vorzugsweise mit einem Abstand vom Ortsbrustbereich positioniert, der größer als 5 m ist. Mit einem gegenseitigen Abstand der Anregungs- und Sensoreinrichtungen kann eine Störung der Messung mit der Sensoreinrichtung durch den Betrieb der Anregungseinrichtung vermindert werden. Besonders bevorzugt werden die Anregungsund Sensoreinrichtungen beide mindestens 5 m hinter der Tunnelortsbrust an der Tunnelwand befestigt oder betrieben. Trotz der bei dieser Anordnung vorzugsweise angeregten Oberflächenwellen erfolgt aber dennoch eine Auswertung von reflektierten Scherwellen, die direkt an der Ortsbrust durch Konversion generiert werden.

Oberflächenwellen haben eine elliptische Schwingungsbahn, wobei die größte Auslenkung senkrecht zur Oberfläche der Tunnelwand gegeben ist. Daher kann es zum Empfang der reflektierten Oberflächenwellen ausreichend sein, lediglich eine Schwingungskomponente, insbesondere die zur Tunnelwand senkrecht ausgerichtete Schwingungskomponente zu messen. Für diesen Zweck reicht es auch, wenn ein seismischer Sensor lediglich ein Sensorelement mit einer entsprechenden Richtungsempfindlichkeit aufweist. Vorzugsweise werden mit der Sensoreinrichtung jedoch Schwingungskomponenten mit mehreren, insbesondere allen drei Raumrichtungen erfasst. Hierzu weist der Sensor drei Sensorelemente mit zueinander senkrecht stehenden Richtungsempfindlichkeiten auf. In diesem Fall können die Oberflächenwellen mit hoher Genauigkeit auch dann gemessen werden, wenn der Sensor aus technischen Gründen nicht optimal relativ zur Tunnelwand orientiert ist. Es ist bspw. möglich, dass ein an der TBM angebrachter Bohrer zur Erzeugung von Bohrungen für die Aufnahme der Sensoren nicht radial (senkrecht) zur Tunnelwand orientierte Löcher bohren kann. Entsprechend kann der Sensor in der Tunnelwand schiefwinklig eingesetzt sein. Die gesuchte radiale Schwingungskomponente kann dann aus den drei Schwingungskomponenten berechnet werden, die mit den Sensorelementen registriert werden.

Die Anwendung des erfindungsgemäßen Verfahrens kann ausschließlich auf die Erfassung des Auftretens einer geologischen Struktur (Änderung der Schallimpedanz im Vortriebsbereich) ausgerichtet sein, wobei jedoch vorzugsweise eine Rekonstruktion der räumlichen Verteilung der geologischen Struktur vorgesehen ist.

Weitere wichtige Merkmale der Erfindung bestehen darin, dass bei Auswertung der seismischen Signale eine Trennung von Anregungs- und Reflektionssignalen vorgesehen ist. Die Trennung basiert in Abhängigkeit vom Typ der seismischen Quelle auf einer Filterung im Zeit- oder Frequenzraum.

Weitere Einzelheiten und Vorteile der Erfindung werden aus der Beschreibung bevorzugter Ausführungsformen der Erfindung unter Bezug auf die beigefügten Zeichnungen ersichtlich. Es zeigen:
- Figur 1:: eine schematische Schnittansicht eines im Bau befindlichen Tunnels;
- Figur 2:: eine Illustration der Positionierung von Sensoren in einer Tunnelwand; und
- Figur 3:: eine schematische Illustration eines Sensors mit drei Sensorteilen zur Erfassung von mehreren Schwingungskomponenten.

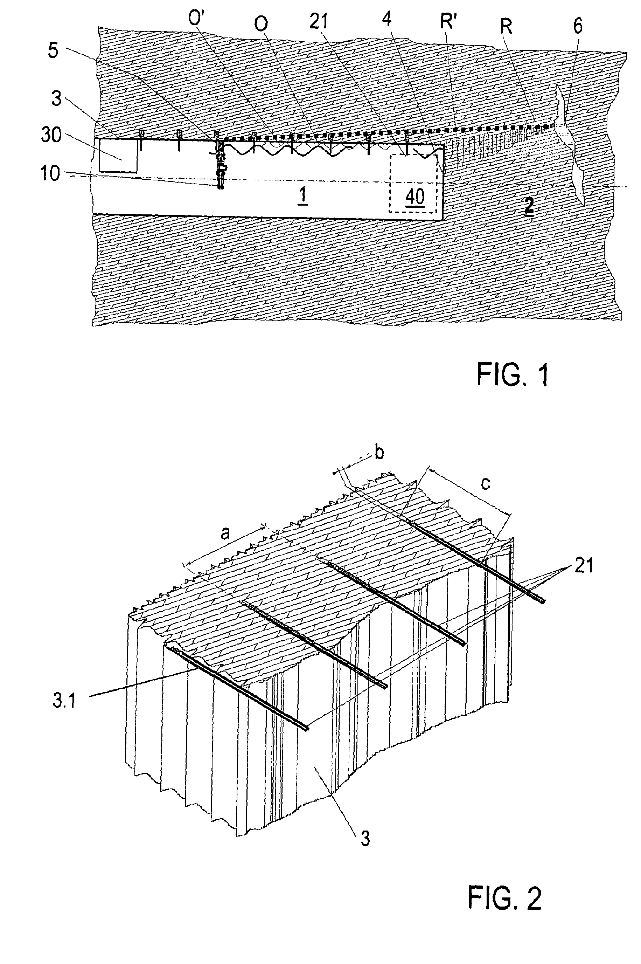

In Figur 1 ist ein im Bau befindlicher Tunnel 1 mit einer seitlichen Tunnelwand 3 dargestellt. Der Vortriebsbereich 2, in den der Tunnel 1 an der Ortsbrust 4 mit der TBM 40 vorgetrieben wird, weist in Vortriebsrichtung eine geologische Störung 6 auf. Im Tunnel 1 ist an einer Anregungsposition 5 als Anregungseinrichtung mindestens eine seismische Quelle 10 angeordnet, die z. B. einen Impakthammer und/oder einen magnetostriktiven Schwingungsgeber umfasst. Wenn mehrere seismische Quellen vorgesehen sind, so werden diese an unterschiedlichen, bekannten und reproduzierbaren Anregungspositionen im Tunnel 1 angeordnet. An der Tunnelwand 3 ist eine Sensoreinrichtung 20 mit einer Vielzahl von seismischen Sensoren 21 angeordnet. Die seismische Quelle 10 und die Sensoreinrichtung 20 sind mit einer Auswertungseinrichtung 30 verbunden, die im Tunnel 1 oder außerhalb des Tunnels 1 angeordnet sein kann.

Die Auswertungseinrichtung 30 ist z. B. zur Berechnung der Laufstrecke der seismischen Wellen in Abhängigkeit von Eigenschaften von Oberflächenwellen in der Tunnelwand 3 eingerichtet, die bei der Erzeugung der seismischen Wellen von der Anregungseinrichtung 10 zur Ortsbrust 4 und beim Empfang der seismischen Wellen von der Ortsbrust 4 zur Sensoreinrichtung 20 laufen.

In Figur 2 ist ein Abschnitt der Tunnelwand 3 dargestellt, der in Höhe der Sensoren 21 aufgeschnitten wurde. In die Tunnelwand 3 sind im Abstand a Löcher 3.1 vom Durchmesser b mit einer Tiefe c gebohrt. Die Sensoren 21 werden angebracht, indem die Löcher 3.1 während des Tunnelvortriebs radial in die Tunnelwand 3 gebohrt und bei Bedarf mit Wandankern und/oder Sensoren 21 bestückt werden. Die seismischen Sensoren 21 werden am Ende von Stäben in die Löcher 3.1 eingeklebt. Als Klebstoff wird ein Zweikomponentenkleber (z. B. Epoxidharzkleber) verwendet, wie er z. B. beim Einsatz von Klebeankern verwendet wird. Die feste Ankopplung des Sensors 21 im Loch 3.1 erfolgt mit dem Zweikomponentenkleber, der beim Einsetzen des Stabes durch dessen Drehung, ähnlich wie beim Setzen von Klebeankern mit Klebekartuschen, vermischt wird. Dazu weist die Vorderfläche des Sensors 21 eine Schräge auf.

Der Abstand a richtet sich nach der gewünschten räumlichen Auflösung und dem Messaufwand und liegt in der Regel zwischen 5 m und 20 m. Der Durchmesser b wird in Abhängigkeit vom maximalen Außendurchmesser der eingesetzten Sensorik, der Länge der Sensorstäbe, der Bohrtechnologie, dem Gesteinsmaterial und dessen Druckhaftigkeit gewählt. Er wird in der Regel etwa 10 mm größer als der maximale Sensordurchmesser gewählt, um den Aufwand an Klebstoff zur Befestigung des Sensors zu begrenzen und die Durchmischung des Klebstoffs zu gewährleisten. Die Tiefe c der Löcher ist abhängig vom Auflockerungsbereich der Tunnelwandung und der bevorzugt zu messenden Wellenart. Sie liegt z. B. zwischen 0,2 m und 4 m.

Mehrere seismische Sensoren 21 können meßtechnisch zu einem Sensorarray verbunden sein, so dass ggf. in Kombination mit unterschiedlichen Anregungspositionen der seismischen Quelle 10 ein räumliches Antwortsignal der geologischen Störung 6 erfasst werden kann.

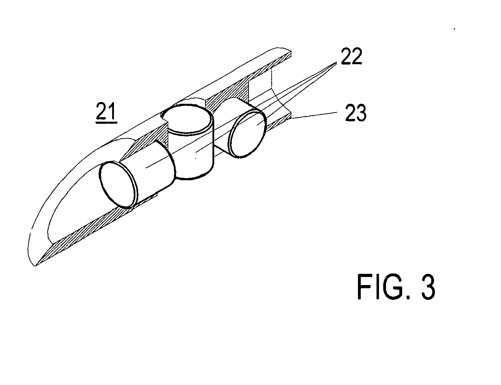

Figur 3 zeigt den Aufbau des vorderen Teils eines seismischen Sensors 21, der als Sensorelemente 22 mehrere Geofone und/oder Akzelerometer enthält. Im dargestellten Beispiel sind drei Geofone 22 mit ihren Empfindlichkeitsachsen in x-, y- und z-Richtung (im Winkel von 90° aufeinander stehend) in einem Grundkörper 23 eingeklebt.

Zur Durchführung des erfindungsgemäßen Verfahrens wird mit der seismischen Quelle 10 eine impulsartige und/oder sinusförmige Anregung erzeugt, so dass Oberflächenwellen O (siehe Figur 1) bis zur Ortsbrust 4 laufen. Die Oberflächenwellen O breiten sich auf der Tunnelwand 3 mit relativ geringer Dämpfung aus. Im Gegensatz zu Raumwellen können sich die Oberflächenwellen O (z. B. Rayleigh-Wellen) oder Grenzschichtwellen nur in der Umgebung der Oberfläche oder Grenzschicht ausbreiten. Sie werden mit zunehmender Tiefe unter der Oberfläche oder Grenzschicht mit dem Verlauf einer exponentiell ansteigenden Funktion gedämpft.

Beim Erreichen der Ortsbrust 4 konvertieren die Oberflächenwellen O zu Raumwellen R, die vorrangig S-Wellen und auch P-Wellen umfassen. Die Raumwellen R laufen im Vortriebsbereich 2 weiter. Diese Wellen werden an der geologischen Störung 6 teilreflektiert. Ein Teil der rücklaufenden Welle R' gelangt dadurch wieder zur Ortsbrust 4, wo wiederum eine Konvertierung in reflektierte Oberflächenwellen O' erfolgt. Die reflektierten Oberflächenwellen O' werden mit der Sensoreinrichtung 20 mit den Sensoren 21 registriert.

Die Sensoren 21 der Sensoreinrichtung 20 liefern seismische Signale, die zur Berechnung der Laufstrecke der seismischen Wellen einer Auswertungsprozedur unterzogen werden. Zur Auswertung ist jedes Verfahren geeignet, mit dem aus gemessenen Laufzeiten der seismischen Wellen eine Rückprojektion auf einen Reflektionspunkt im Vortriebsbereich 2 ermöglicht wird. Ein derartiges Verfahren basiert z. B. auf dem Konzept der klassischen Kirchhoff-Migration (siehe J. Schleicher et al. in "Geophysics", Bd. 58, 1993, S. 1112-1126). Dabei wird ein theoretisches Geschwindigkeitsmodell zur Berechnung von Flächen gleicher Laufzeit von reflektierten Raumwellen (Isochronen) verwendet. Entlang dieser Isochronen werden die gemessenen seismischen Amplituden Gitterpunkten zugeordnet. Die Form der Isochronen ist von der räumlichen Lage von Quell- und Empfängerpunkten und vom verwendeten Ausbreitungsmodell der seismischen Wellen abhängig.

Erfindungsgemäß wird das Ausbreitungsmodell dahingehend modifiziert, dass die seismischen Wellen entlang der Tunnelwand 3 als Oberflächenwellen von der Anregungseinrichtung 10 zur Ortsbrust 4 und/oder beim Empfang der seismischen Wellen von der Ortsbrust 4 zur Sensoreinrichtung 20 laufen. Die Position der Ortsbrust 4 wird als sekundäre seismische Quelle der Raumwellen verwendet. Des Weiteren basiert das Ausbreitungsmodell darauf, dass an der Ortsbrust 4 eine Konvertierung in oder aus Raumwellen erfolgt, die zu oder von der geologischen Struktur 6 zurück laufen. Die Isochronen (oder Flächen gleicher Laufzeit) nehmen so die Form von Kugeln um den Punkt der Konversion von Oberflächen- zu Raumwellen an der Ortsbrust 4 an. Die Abbildung von Reflexionen besteht nun in der Zuweisung der an den Sensoren 21 gemessenen Amplituden auf die Isochronen. Bei der Durchführung der Messungen an einer Ortsbrustposition entsteht so eine räumliche Unschärfe, die eine Bestimmung des Einfallswinkels des abgebildeten Reflektors zur Tunnelvortriebsrichtung verhindert. Die räumliche Unschärfe wird durch die Durchführung der Messungen bei verschiedenen Ortsbrustpositionen und somit die konstruktive Überlagerung der Amplituden an der tatsächlichen Position des Reflektors aufgelöst. Somit ist es möglich, den Einfallswinkel einer geologischen Störung zur Vortriebsrichtung zu bestimmen und somit den Schnittpunkt der Tunneltrasse mit der Störung vorherzusagen.

Figur 1 zeigt eine gepunktete Linie von der Anregungsposition 5 zur geologischen Struktur 6. Bei herkömmlichen Modellen wurde davon ausgegangen, dass die Wellenausbreitung entlang der gepunkteten Linie erfolgt. Der reale Weg von der Anregungsposition 5 über die Ortsbrust 4 zur geologischen Struktur 6 hingegen ist länger. Das erfindungsgemäß verwendete Ausbreitungsmodell ist somit besser an die realen Verhältnisse angepasst.

Erfindungsgemäß wird z. B. eine Laufzeit der seismischen Wellen von der Anregungseinrichtung 10 über den Vortriebsbereich 2 zur Sensoreinrichtung 20 ermittelt und eine entsprechende Laufstrecke der seismischen Wellen in Abhängigkeit von der Laufzeit berechnet. Die Berechnung der Laufstrecke der seismischen Wellen erfolgt in Abhängigkeit von der Weglänge und Geschwindigkeit der Oberflächenwellen O, O' entlang der Tunnelwand 3.

Für eine vollständige Abbildung der geologischen Struktur 6 im Raum werden die Schritte der Anregung der seismischen Wellen, des Empfangs der reflektierten Wellen und der Berechnung der Laufstrecken der seismischen Wellen im Vortriebsbereich 2 für verschiedene Vortriebspositionen der Tunnelbohrmaschine wiederholt. Bei einer Vortriebsgeschwindigkeit von z. B. 20 bis 30 m in 24 h und einem Vortriebshub der TBM von 0,8 m bis 1,5 m werden pro Tag z. B. 15 Messungen durchgeführt. Es werden 15 Laufstrecken der seismischen Wellen im Vortriebsbereich 2 ermittelt und aus diesem in Abhängigkeit von den verschiedenen Vortriebspositionen der Tunnelbohrmaschine die Lage der geologischen Struktur 6 im Raum berechnet. Es kann insbesondere der Neigungswinkel z. B. einer die Tunnelachse kreuzende Störungszone und damit die Entfernung der Ortsbrust 4 vom Durchstoß des Tunnels durch die Störungszone berechnet werden.

Nach der Erfassung und Lokalisierung einer geologischen Struktur können anschließend gezielt Erkundungsbohrungen angesetzt werden. Falls aus einem anderen Erkundungsverfahren bereits geologischen Vorabinformationen über die zu erwartende Struktur vorliegen, kann die mit dem erfindungsgemäßen Verfahren die geometrische Beschreibung der Struktur präzisiert werden.

Die in der Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Vorauserkundung beim Bau eines Tunnels (1), mit den Schritten:
- Erzeugung von seismischen Wellen in einem Vortriebsbereich (2) des Tunnels (1) mit einer Anregungseinrichtung (10),
- Empfang von seismischen Wellen, die im Vortriebsbereich (2) reflektiert wurden, mit einer Sensoreinrichtung (20), und
- Auswertung von seismischen Signalen der Sensoreinrichtung (20) unter Verwendung eines vorbestimmten Ausbreitungsmodells der seismischen Wellen von der Anregungseinrichtung (10) über den Vortriebsbereich (2) zur Sensoreinrichtung (20),
**dadurch gekennzeichnet, dass**
- das Ausbreitungsmodell der seismischen Wellen auf Eigenschaften von Oberflächenwellen (O) in einer Tunnelwand (3) basiert, die bei der Erzeugung der seismischen Wellen von der Anregungseinrichtung (10) zu einem Ortsbrustbereich (4) des Tunnels und/oder beim Empfang der seismischen Wellen vom Ortsbrustbereich (4) zur Sensoreinrichtung (20) laufen.

2. Verfahren nach Anspruch 1, bei dem das Ausbreitungsmodell als Auswertungsparameter Weglängen der Oberflächenwellen (O) von der Anregungseinrichtung (10) zum Ortsbrustbereich (4) des Tunnels (1) und vom Ortsbrustbereich (4) zur Sensoreinrichtung (20) enthält.

3. Verfahren nach Anspruch 1 oder 2, bei dem das Ausbreitungsmodell als Auswertungsparameter die Geschwindigkeit der Oberflächenwellen (O) in der Tunnelwand (3) enthält.

4. Verfahren nach mindestens einem der vorhergehenden Ansprüche, bei dem die Erzeugung der seismischen Wellen mit einer Anregung der Oberflächenwellen (O) eine Impuls-Anregung oder eine periodische Sinus-Anregung umfasst.

5. Verfahren nach mindestens einem der vorhergehenden Ansprüche, bei dem die seismischen Wellen in einem Frequenzbereich von 200 Hz bis 600 Hz erzeugt werden.

6. Verfahren nach mindestens einem der vorhergehenden Ansprüche, bei dem die Erzeugung der seismischen Wellen an mehreren Anregungspositionen (5) der Tunnelwand (3) erfolgt.

7. Verfahren nach mindestens einem der vorhergehenden Ansprüche, bei dem die Erzeugung der seismischen Wellen wiederholt mit verschiedenen Vortriebpositionen des Ortsbrustbereiches (4) des Tunnels (1) erfolgt.

8. Verfahren nach mindestens einem der vorhergehenden Ansprüche, bei dem die Sensoreinrichtung (20) eine Vielzahl von im Tunnel verteilten Sensoren (21) umfasst, die zum Empfang der Oberflächenwellen (O) eingerichtet sind, die vom Ortsbrustbereich (4) zur Sensoreinrichtung (20) laufen.

9. Verfahren nach mindestens einem der vorhergehenden Ansprüche, bei dem die Erzeugung der seismischen Wellen mit einem Abstand vom Ortsbrustbereich (4) erfolgt, der größer als 2 m ist.

10. Verfahren nach mindestens einem der vorhergehenden Ansprüche, bei dem der Empfang der seismischen Wellen mit einem Abstand vom Ortsbrustbereich (4) erfolgt, der größer als 5 m ist.

11. Verfahren nach mindestens einem der vorhergehenden Ansprüche, bei dem mit der Sensoreinrichtung (20) Schwingungskomponenten der Oberflächenwellen (O), die vom Ortsbrustbereich (4) zur Sensoreinrichtung (20) laufen, mit verschiedenen Raumrichtungen erfasst werden.

12. Verfahren nach mindestens einem der vorhergehenden Ansprüche, bei dem die Auswertung von Signalen der Sensoreinrichtung (20) eine Erfassung des Auftretens einer geologischen Struktur (6) und/oder eine Rekonstruktion einer räumlichen Verteilung der geologischen Struktur (6) umfasst.

13. Vorrichtung zur Vorauserkundung beim Bau eines Tunnel (1), die umfasst:
- eine Anregungseinrichtung (10) zur Erzeugung von seismischen Wellen in einem Vortriebsbereich (2) des Tunnels (1),
- eine Sensoreinrichtung (20) zum Empfang seismischen Wellen, die im Vortriebsbereich (2) reflektiert wurden, und
- eine Auswertungseinrichtung (30) zur Auswertung von seismischen Signalen der Sensoreinrichtung (20), wobei die Auswertungseinrichtung (30) ein vorbestimmtes Ausbreitungsmodell enthält, das den Lauf der seismischen Wellen von der Anregungseinrichtung (10) über den Vortriebsbereich (2) zur Sensoreinrichtung (20) beschreibt,
**dadurch gekennzeichnet, dass**
- das Ausbreitungsmodell der seismischen Wellen auf Eigenschaften von Oberflächenwellen (O) in einer Tunnelwand (3) basiert, die bei der Erzeugung der seismischen Wellen von der Anregungseinrichtung (10) zu einem Ortsbrustbereich (4) des Tunnels und/oder beim Empfang der seismischen Wellen vom Ortsbrustbereich (4) zur Sensoreinrichtung (20) laufen.

14. Vorauserkundungsvorrichtung nach Anspruch 13, bei dem die Anregungseinrichtung (10) mit einem Abstand von dem Ortsbrustbereich (4) angeordnet ist, der kleiner als 2 m ist.

15. Vorauserkundungsvorrichtung nach Anspruch 13 oder 14, bei dem die Anregungseinrichtung (10) mehrere, im Tunnel verteilte Anregungsquellen (11) umfasst.

16. Vorauserkundungsvorrichtung nach mindestens einem der Ansprüche 13 bis 15, bei dem die Anregungseinrichtung (10) eine Impulsquelle (12) oder eine Schwingungsquelle (13) umfasst.

17. Vorauserkundungsvorrichtung nach mindestens einem der Ansprüche 13 bis 16, bei dem die Anregungseinrichtung (10) an einer Tunnelbohrmaschine angeordnet ist.

18. Vorauserkundungsvorrichtung nach mindestens einem der Ansprüche 13 bis 17, bei dem die Anregungseinrichtung (10) zur Anregung der Oberflächenwellen (O) in einem Frequenzbereich von 200 Hz bis 600 Hz eingerichtet ist.

19. Vorauserkundungsvorrichtung nach mindestens einem der Ansprüche 13 bis 18, bei dem die Sensoreinrichtung (20) mit einem Abstand vom Ortsbrustbereich (4) angeordnet ist, der größer als 5 m ist.

20. Vorauserkundungsvorrichtung nach mindestens einem der Ansprüche 13 bis 19, bei dem die Sensoreinrichtung (20) eine Vielzahl von im Tunnel verteilten Sensoren (21) zum Empfang der Oberflächenwellen umfasst.

21. Vorauserkundungsvorrichtung nach mindestens einem der Ansprüche 13 bis 20, bei dem die Auswertungseinrichtung (30) zur Erfassung und/oder zur Rekonstruktion einer räumlichen Verteilung einer geologischen Struktur (6) im Vortriebsbereich (2) eingerichtet ist.
